# EUROPEAN PATENT APPLICATION

(11) **EP 4 782 997 A1**
(43) Date of publication of application: **29.07.2026**
(21) Application number: 26150717.2
(22) Date of filing: 08.01.2026
(51) Int. Cl.: G06F 9/451, G06F 16/957

(54) **PROGRAM, DISPLAY METHOD, AND INFORMATION PROCESSING SYSTEM**

(30) Priority: 28.01.2025 JP 2025011983
(71) Applicant: Casio Computer Co., Ltd., Tokyo 151-8543 (JP)
(72) Inventor: ONO, Manato, Tokyo, 205-8555 (JP)
(74) Representative: Plougmann Vingtoft a/s

(57) **Abstract**

A program (121, 221) causes a computer (21) to, in displaying a workspace (241a) including an electronic label (241c) by a browser (221), perform a process of changing a display form of the electronic label (241c) in accordance with a device type of a device (20) on which the browser (221) is running in a case where a width of a display region of the browser (221) is smaller than a predetermined value.

## Description

### BACKGROUND OF THE INVENTION

### TECHNICAL FIELD

The present disclosure relates to a program, a display method, and an information processing system.

### DESCRIPTION OF RELATED ART

There is a known application capable of displaying electronic labels on the screen of a computer. (Refer to, for example, JP 2022-137863 A). Conventionally, in a case where electronic label(s) are displayed on a web browser (which is hereinafter referred to as "browser"), if the width of the display region of the browser is smaller than a predetermined value, the electronic labels tend to be displayed in a display form optimized for smartphones even when they are actually displayed on a personal computer (PC).

### SUMMARY OF THE INVENTION

For users who display electronic labels on their PCs, change of the display form of the electronic labels due to change of the browser size is not user-friendly.

Objects of the present disclosure include improving convenience for users who use electronic labels.

In order to achieve at least one of the objects, a program according to the present disclosure causes a computer to, in displaying a workspace including an electronic label by a browser, perform a process of changing a display form of the electronic label in accordance with a device type of a device on which the browser is running in a case where a width of a display region of the browser is smaller than a predetermined value.

According to the present disclosure, convenience for users who use electronic labels can be improved.

### BRIEF DESCRIPTION OF DRAWINGS

FIG. 1 shows a schematic configuration of a learning support system according to an embodiment(s).
FIG. 2 is a block diagram showing a functional configuration of a server shown in FIG. 1.
FIG. 3 is a block diagram showing a functional configuration of terminal device(s) shown in FIG. 1.
FIG. 4 is a flowchart of a mathematical tool display process that is performed by a controller shown in FIG. 3.
FIG. 5A shows an example of a mathematical tool display screen in PC mode.
FIG. 5B shows an example of the mathematical tool display screen in Smartphone mode.
FIG. 5C shows an example of the mathematical tool display screen in Tiny mode.
FIG. 6 shows an example of a predetermined operation to display a settings menu.
FIG. 7A shows an example of the settings menu in the PC mode.
FIG. 7B shows an example of the settings menu in the Smartphone mode.
FIG. 7C shows an example of the settings menu in the Tiny mode.

### DETAILED DESCRIPTION

Hereinafter, one or more embodiments for carrying out the present disclosure will be described with reference to the drawings. The embodiments described below are provided with various limitations technically preferable for carrying out the present disclosure. Therefore, the technical scope of the present disclosure is not limited to the embodiments below or illustrated examples.

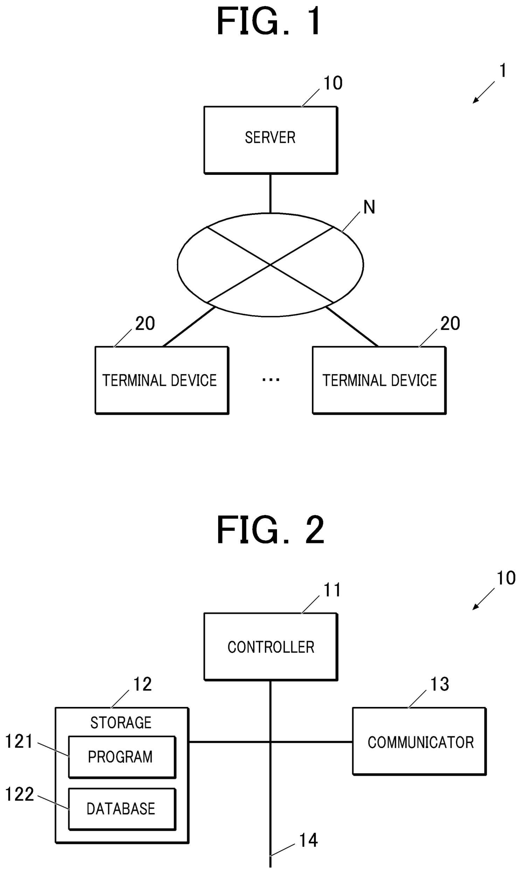

As shown in FIG. 1, a learning support system 1 (information processing system) in this embodiment includes a server 10 and terminal device(s) 20 (information processing device). The server 10 and the terminal device 20 are communicatively connected with one another via a communication network N. The communication network N is any communication network, such as the Internet, a wireless local area network (LAN), a wired LAN, a mobile communication network, a short-range wireless communication network, or a combination of some or all of these. The number of terminal devices 20 is not specifically limited.

The server 10 provides a learning support service by the Web in response to access of the terminal device 20, distributes/delivers an application (application program) necessary for providing the learning support service, associates and stores information input in the learning support service with a user ID in a database 122, and reads and sends the information stored in the database 122 to the terminal devices 20 in response to a request from the application.

As shown in FIG. 2, the server 10 includes a controller 11, a storage 12 and a communicator 13. These components are connected with one another via a system bus 14.

The controller 11 includes a central processing unit (CPU) and a random access memory (RAM). The CPU of the controller 11 is a processor that reads programs 121 stored in the storage 12 into the RAM, executes the programs 121, and performs various types of arithmetic processing, thereby controlling the operation of each component of the server 10. The controller 11 may include two or more processors, for example, CPUs. The processors may perform multiple processes that are performed by the controller 11 in this embodiment. In this case, the processors may be involved in the same process(es). Alternatively, the processors may independently perform different processes in parallel.

The storage 12 is a non-transitory storage medium readable by the CPU of the controller 11. The storage 12 stores the programs 121 and various data. The storage 12 includes a nonvolatile memory, such as a hard disk drive (HDD) or a solid state drive (SSD). The programs 121 stored in the storage 12 include a program to provide the learning support service to the terminal device 20. For example, the programs 121 include a mathematical tool application to be delivered to the terminal device 20. The storage 12 also includes the database 122 in which the information input in the learning support service is associated and stored with the user ID.

The communicator 13 performs communication in accordance with a predetermined communication standard. By this communication, the communicator 13 sends and receives data to and from the terminal device 20 via the communication network N.

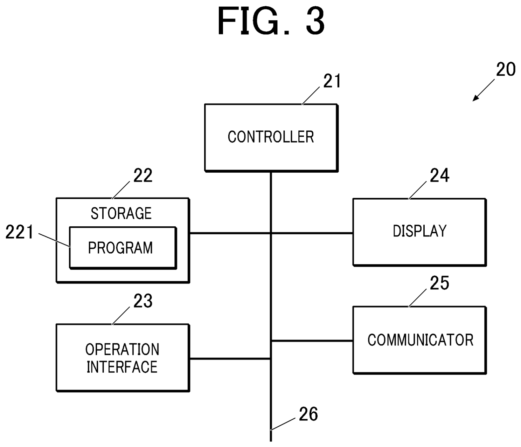

The terminal device 20 is a terminal device that is used by a learner (user). In this embodiment, the terminal device 20 is a PC, smartphone or tablet. As shown in FIG. 3, the terminal device 20 includes a controller 21, a storage 22, an operation interface 23, a display 24 and a communicator 25. These components are connected with one another via a system bus 26.

The controller 21 (processor) includes a central processing unit (CPU) and a random access memory (RAM). The CPU of the controller 21 is a processor that reads programs 221 stored in the storage 22 into the RAM, executes the programs 221, and performs various types of arithmetic processing, thereby controlling the operation of each component of the terminal device 20. The controller 21 may include two or more processors, for example, CPUs. The processors may perform multiple processes that are performed by the controller 21 in this embodiment. In this case, the processors may be involved in the same process(es). Alternatively, the processors may independently perform different processes in parallel.

The storage 22 is a non-transitory storage medium readable by the CPU of the controller 21. The storage 22 stores the programs 221 and various data. The storage 22 includes a nonvolatile memory, such as a hard disk drive (HDD) or a solid state drive (SSD). The programs 221 stored in the storage 22 include a browser and the mathematical tool application delivered from the server 10. The operation interface 23 includes at least one of a keyboard, a touchscreen and a mouse, for example. The operation interface 23 receives operations made by the user and outputs input signals corresponding to the operations to the controller 21.

The display 24 includes a liquid crystal display (LCD) or an electro-luminescence (EL) display. The display 24 performs various types of display in accordance with pieces of display information (display instructions) from the controller 21. The communicator 25 performs communication in accordance with a predetermined communication standard. By this communication, the communicator 25 sends and receives data to and from the server 10 via the communication network N.

Next, the operation of the learning support system 1 will be described. In this embodiment, display that is performed when the user uses a mathematical tool(s) included in the learning support service will be described.

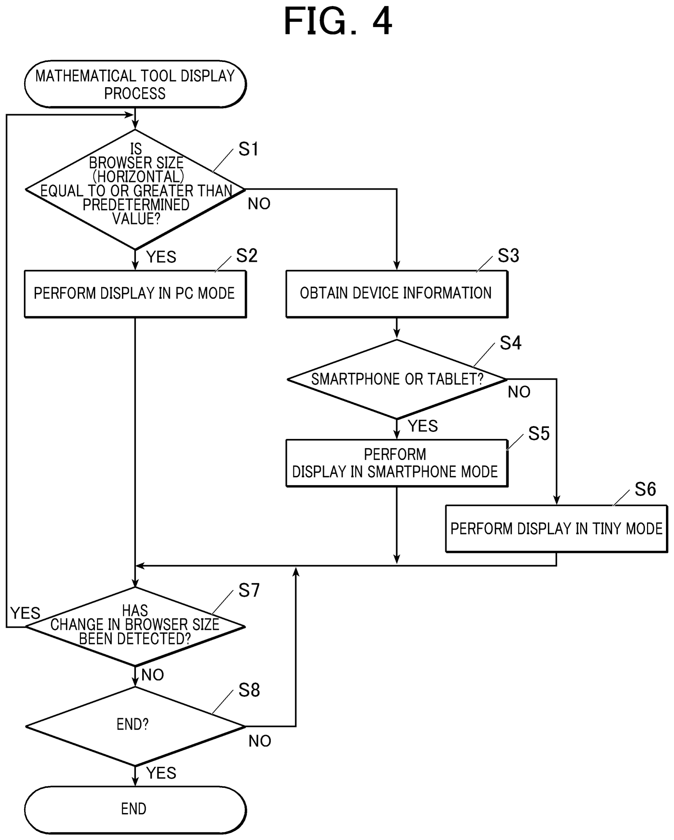

For example, when the user logs into the website of the learning support service via the browser on his/her terminal device 20, the server 10 sends, to the terminal device 20, screen information for displaying a not-shown menu screen regarding the learning support service by the browser. In the terminal device 20, when the controller 21 receives the screen information on the menu screen from the server 10 via the communicator 25, the controller 21 displays (performs control to display) the menu screen on (by) the display 24 in cooperation with the browser. Items selectable from the menu screen include mathematical tools. When an operation to open a mathematical tool is made on the menu screen with the operation interface 23, the controller 21 sends operation information indicating that an operation to open a mathematical tool has been made to the server 10 via the communicator 25. When the server 10 receives, from the terminal device 20, the operation information indicating that an operation to open a mathematical tool has been made, the server 10 reads the mathematical tool application from the storage 12 and delivers it to the terminal device 20 via the communicator 13. The mathematical tool application is an application for providing mathematical tools on the browser. When the controller 21 of the terminal device 20 receives the mathematical tool application via the communicator 25, the controller 21 stores the received mathematical tool application in the storage 22. The mathematical tool application may be stored in the RAM. The mathematical tool application is included in the programs 221. The controller 21 then performs a mathematical tool display process shown in FIG. 4 in cooperation with the mathematical tool application.

In the mathematical tool display process, the controller 21 first determines whether the browser size (horizontal) is equal to or greater than a predetermined value (e.g., 545 pixels) (Step S1). The browser size is the size of the display region of the browser, and the browser size (horizontal) is the width of the display region of the browser.

If the controller 21 determines that the browser size (horizontal) is equal to or greater than a predetermined value (Step S1; YES), the controller 21 displays, on the display 24, a mathematical tool screen 241 in PC mode (first mode) (Step S2) and proceeds to Step S7. In Step S2, the controller 21, for example, generates screen information on the mathematical tool screen 241 in the PC mode and displays, on the display 24, the mathematical tool screen 241 in the PC mode by the browser.

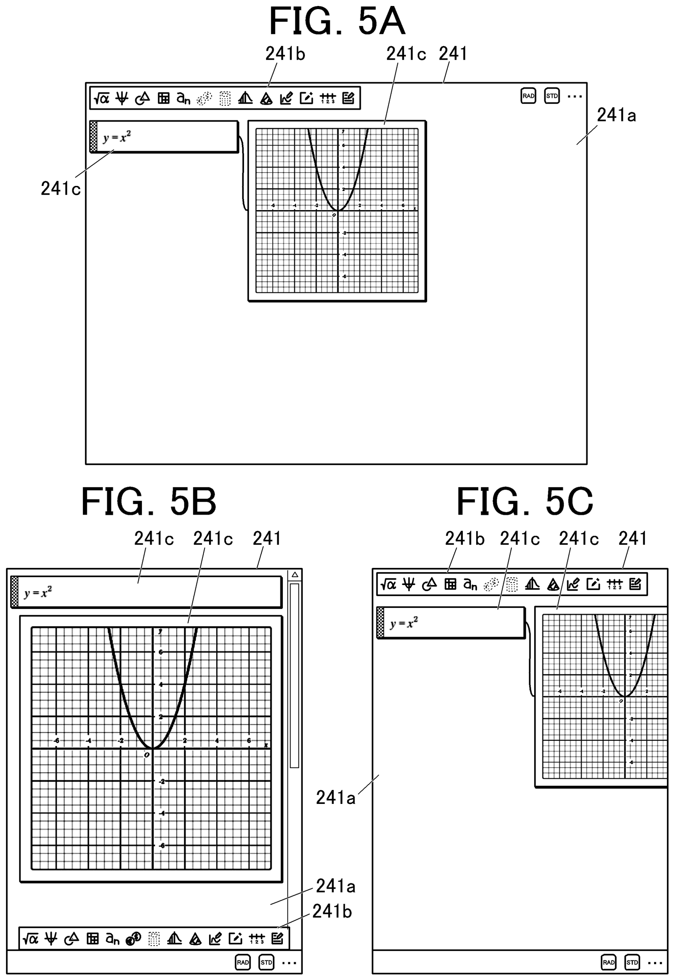

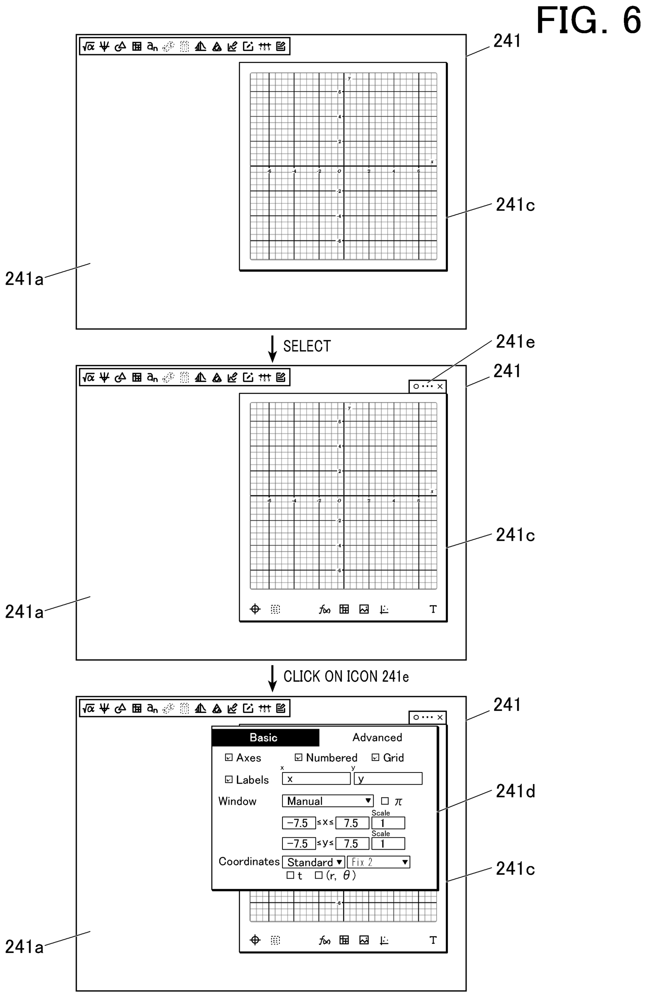

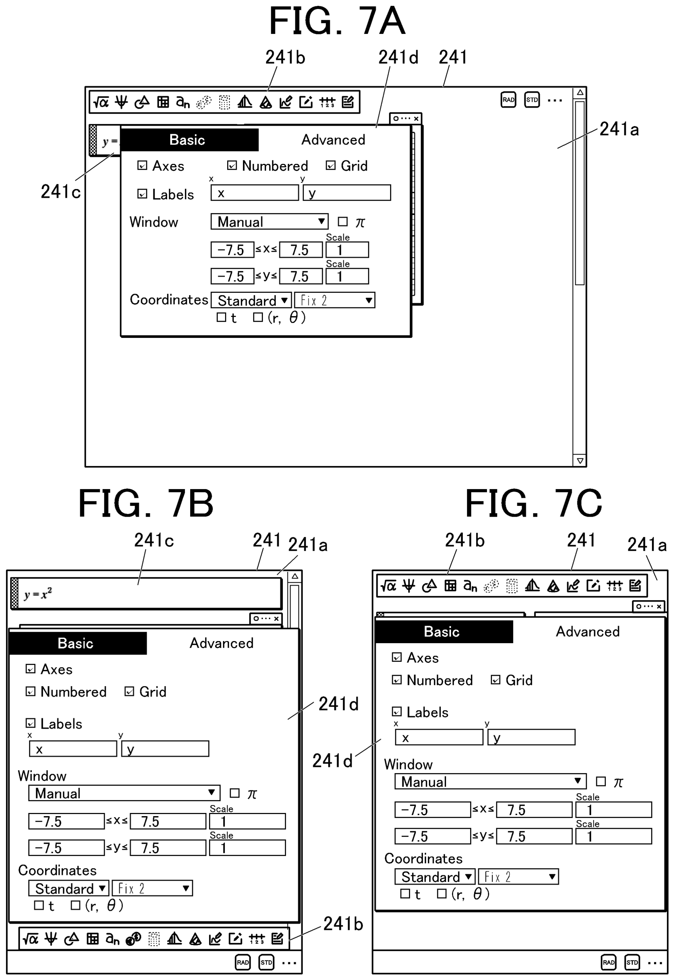

As shown in FIG. 5A to FIG. 5C, the mathematical tool screen 241 is a screen where a workspace 241a for the user to use mathematical tools is displayed, and is displayed in the browser size. The workspace 241a may be referred to as a notebook or paper. The workspace 241a is provided with an icon bar 241b. The icon bar 241b has multiple icons corresponding to respective types of mathematical tool. The types of mathematical tool include, for example, a mathematical tool to calculate an input formula and display the result, and a graph tool to draw a graph of the input formula. When one of the icons is selected from the icon bar 241b with the operation interface 23, a sticky 241c (electronic label) corresponding to the selected icon is displayed. Further, when one of stickies 241c displayed in the workspace 241a is selected and a predetermined operation to make an instruction to display a settings menu are made, as shown in FIG. 7A to FIG. 7C, a settings menu 241d for the selected sticky 241c is displayed. The settings menu 241d is a screen for performing sticky-related settings. Examples of the predetermined operation to make an instruction to display the settings menu 241d include, as shown in FIG. 6, a click operation on an icon 241e to make an instruction to display the settings menu 241d. The icon 241e is displayed when one of stickies 241c displayed in the workspace 241a is selected.

The PC mode is, as shown in FIG. 5A, a mode in which stickies 241c are displayed at predetermined positions or positions changed therefrom by user operations in the workspace 241a, in sizes preset for the respective types of sticky 241c or sizes changed therefrom by user operations. In the PC mode, as shown in FIG. 5A, two or more stickies 241c can be arranged next to one another in the horizontal direction. In the PC mode, both vertical scrolling and horizontal scrolling can be made, and therefore stickies 241c that do not fit in the mathematical tool screen 241 can be displayed by scrolling. In the PC mode, the mathematical tool screen 241 can be scrolled, for example, by a predetermined mouse operation.

In the PC mode, when an instruction to display the settings menu 241d for a sticky 241c (e.g., sticky 241c of the graph tool) is made by the operation interface 23 being operated, the controller 21 displays, as shown in FIG. 7A, the settings menu 241d on or near the target sticky 241c in a preset size (e.g., size having a width greater than the predetermined value in Step S1 but smaller than the browser size (horizontal)). In this embodiment, the settings menu 241d is closed when an operation is made on the outside of the region of the settings menu 241d.

If the controller 21 determines in Step S1 that the browser size (horizontal) is not equal to or greater than the predetermined value (Step S1; NO), the controller 21 obtains device information on the terminal device 20 (own device) (Step S3). Standard functions of a browser include a function of obtaining user agent information. The user agent information includes device information, such as the type of device provided with the browser, the type of operating system (OS), and the type of the browser. The controller 21 obtains the device information included in the user agent information from the browser.

Next, the controller 21 determines whether the terminal device 20 on which the browser is running is a smartphone or tablet on the basis of the obtained device information (Step S4). If the controller 21 determines that the terminal device 20 is a smartphone or tablet (Step S4; YES), the controller 21 displays, on the display 24, the mathematical tool screen 241 in Smartphone mode (third mode) (Step S5) and proceeds to Step S7. In Step S5, the controller 21, for example, generates screen information on the mathematical tool screen 241 in the Smartphone mode and displays, on the display 24, the mathematical tool screen 241 in the Smartphone mode by the browser.

The Smartphone mode is, as shown in FIG. 5B, a mode in which stickies 241c are displayed in sizes and arrangement optimized for the browser size on a device (smartphone or tablet), which is the terminal device 20. Smartphones have a smaller screen size (browser size) than Pcs and are vertically long. On smartphones, only vertical scrolling can be made. Therefore, in the Smartphone mode, stickies 241c are displayed in a display form in which the width of the stickies 241c corresponds to the browser size (horizontal). More specifically, the stickies 241c are displayed such that the width thereof fits in the browser size (horizontal) and is substantially identical to the browser size (horizontal). Substantially identical to the browser size (horizontal) may be substantially identical to the width of the display region of the browser including the scrollbar, or may be substantially identical to the width of the display region of the browser not including the scrollbar. In the case where there are two or more stickies 241c to be displayed in the workspace 241a, the stickies 241c are displayed next to one another vertically in the display form in which the width thereof corresponds to the browser size (horizontal) .

In the Smartphone mode, the settings menu 241d is displayed in a size that just fits in the browser size (is substantially identical to the browser size) so that any part of the settings menu 241d is not beyond the screen or hidden and can be operated accordingly. Substantially identical to the browser size (horizontal) may be substantially identical to the size of the display region of the browser including the scrollbar, or may be substantially identical to the size of the display region of the browser not including the scrollbar. In other words, when an instruction to display the settings menu 241d for a sticky 241c (e.g., sticky 241c of the graph tool) is made by the operation interface 23 being operated, the controller 21 displays, as shown in FIG. 7B, the settings menu 241d in a size that just fits in the browser size. In the Smartphone mode, the controller 21 displays the settings menu 241d with a layout (e.g., arrangement or size of letters of each item in the settings menu 241d) different from that of the settings menu 241d in the PC mode. By the layout of the settings menu 241d optimized for the browser size, the user can easily operate the settings menu 241d, and convenience for the user to make operations can be improved accordingly. In other words, in the Smartphone mode, the controller 21 displays, on the display 24, the settings menu 241d in a display form (size, layout, etc.) different from that in the PC mode.

If the controller 21 determines that the terminal device 20 on which the browser is running is not a smartphone or tablet (Step S4; NO), namely, is a PC, the controller 21 displays, on the display 24, the mathematical tool screen 241 in Tiny mode (second mode) (Step S6) and proceeds to Step S7. In Step S6, the controller 21, for example, generates screen information on the mathematical tool screen 241 in the Tiny mode and displays, on the display 24, the mathematical tool screen 241 in the Tiny mode by the browser.

The Tiny mode is a mode that is used when the terminal device 20 is a PC for displaying stickies 241c, as shown in FIG. 5C, in the same (identical) display form as (to) that in the PC mode even when the browser size (horizontal) is smaller than the predetermined value. In other words, in the Tiny mode, stickies 241c are displayed at predetermined positions (same positions as those in the PC mode) or positions changed therefrom by user operations in the workspace 241a, in sizes preset for the respective types of sticky 241c (same sizes as those in the PC mode) or sizes changed therefrom by user operations. Stickies 241c that do not fit in the mathematical tool screen 241 can be displayed by scrolling, for example, by a predetermined mouse operation (e.g., drag operation on/to a point on the workspace 241a).

In the Tiny mode, when an instruction to display the settings menu 241d for a sticky 241c (e.g., sticky 241c of the graph tool) is made, the controller 21 displays, as shown in FIG. 7C, the settings menu 241d in a size that just fits in the browser size so that as in the Smartphone mode, any part of the settings menu 241d is not beyond the screen or hidden and can be operated accordingly. Further, in the Tiny mode, the controller 21 displays the settings menu 241d with the layout same as that in the Smartphone mode. By the layout of the settings menu 241d optimized for the browser size, the user can easily operate the settings menu 241d, and convenience for the user to make operations can be improved accordingly. In other words, in the Tiny mode, the controller 21 displays, on the display 24, the settings menu 241d in a display form (size, layout, etc.) different from that in the PC mode.

In Step S7, the controller 21 determines whether a change in the browser size, which is made by the operation interface 23 being operated, has been detected (Step S7). If the controller 21 determines that a change in the browser size has been detected (Step S7; YES), the controller 21 returns to Step S1 and performs the processes in Step S1 and the subsequent steps. If the controller 21 determines that no change in the browser size has been detected (Step S7; NO), the controller 21 determines whether an instruction to end the mathematical tool has been made by the operation interface 23 being operated (Step S8). If the controller 21 determines that no instruction to end the mathematical tool has been made (Step S8; NO), the controller 21 returns to Step S7. If the controller 21 determines that an instruction to end the mathematical tool has been made (Step S8; YES), the controller 21 ends the mathematical tool display process.

If the controller 21 determines that a user operation different from the user operation to change the browser size has been made during the execution of the mathematical tool display process, the controller 21 performs a process, which includes change of display, corresponding to the user operation.

In the mathematical tool display process, in the case where the workspace 241a including sticky(ies) 241c is displayed on a PC by the browser, the display form (size, position, etc.) of the stickies 241c does not change even when the browser size (horizontal) is changed. This can improve user's convenience. Further, in the case where the settings menu 241d for a sticky 241c is displayed on a PC by the browser, if the browser size (horizontal) is smaller than the predetermined value, the settings menu 241d is displayed so as to fit in the browser size. This can prevent part of the settings menu 241d from being outside (beyond) the screen and hidden, and accordingly can prevent user operations from being unable to be made.

As described above, the mathematical tool application, which is provided to the terminal device(s) 20, in displaying the workspace 241a including a sticky(ies) 241c by the browser, changes the display form (size, position, etc.) of the sticky 241c in accordance with the device type of the terminal device 20 (device) on which the browser is running in the case where the browser size (horizontal) is smaller than a predetermined value. Therefore, in the case where the browser size (horizontal) is smaller than the predetermined value, the sticky 241c can be displayed in the optimum display form for the device type. This can improve convenience for the user who uses the sticky 241c. Further, since the sticky 241c can be displayed in the optimum display form for the device type, a process(es) for causing the browser to perform display desired by the user can be reduced if not eliminated. As a result, the processing amount of the controller 21 can be reduced, and a contribution can be made to the improvement of computer's functions.

For example, in the mathematical tool display process that is performed by the mathematical tool application, in the case where the browser size (horizontal) is smaller than the predetermined value, if the device on which the browser is running is a PC, the workspace 241a is displayed in the Tiny mode that is identical in the display form of the sticky 241c to the PC mode that is the display mode for the case where the browser size is equal to or greater than the predetermined value. In the case where the browser size is smaller than the predetermined value, if the device on which the browser is running is a smartphone or tablet, the workspace 241a is displayed in the Smartphone mode in which the sticky 241c is displayed with a width that corresponds to the browser size (horizontal). Therefore, for example, in the case where the device type is a PC, the display form of the sticky 241c does not change even when the browser size is changed. This can improve user's convenience. Further, in the case where the device type is a PC, since the display form of the sticky 241c does not change even when the browser size is changed, the process (es) for causing the browser to perform display desired by the user can be reduced if not eliminated. As a result, the processing amount of the controller 21 can be reduced, and a contribution can be made to the improvement of the computer's functions.

For example, in the mathematical tool display process, in the Smartphone mode, the sticky 241c is displayed such that the width of the sticky 241c fits in the browser size (horizontal) and is substantially identical to the browser size (horizontal). Therefore, in the case where the device type is a smartphone or tablet, the sticky 241c can be displayed in a display form in which user operations can be made easily.

Further, for example, in the mathematical tool display process, in the Smartphone mode, in the case where there are two or more stickies 241c to be displayed in the workspace 241a, the stickies 241c are displayed next to one another vertically. Therefore, in the case where the device type is a smartphone or tablet, the stickies 241c can be displayed in the display form in which user operations can be made easily.

Further, in the mathematical tool display process, the settings menu 241d for the sticky 241c is displayed in the identical display form in the Tiny mode and the Smartphone mode. Therefore, in the case where the settings menu 241d for the sticky 241c is displayed on a PC by the browser, even when the browser size is changed to be smaller, it is possible to prevent part of the settings menu 241d from being outside (beyond) the screen and hidden, and accordingly can prevent user operations from being unable to be made. Displaying the settings menu 241d in the optimum display form for the browser size allows the user to easily operate the settings menu 241d, and can improve convenience for the user to make operations. In other words, presentation of information (display of the settings menu 241d) in this embodiment reliably assists the user in performing technical tasks through the human-machine interaction process.

Further, in the mathematical tool display process, it is determined whether the browser size (horizontal) is equal to or greater than the predetermined value, and if it is determined that the browser size (horizontal) is equal to or greater than the predetermined value, the workspace 241a is displayed in the PC mode, and if it is determined that the browser size (horizontal) is smaller than the predetermined value, the workspace 241a is displayed in the Tiny mode or in the Smartphone mode in accordance with the device on which the browser is running. Therefore, in the case where the browser size (horizontal) is smaller than the predetermined value, the sticky 241c can be displayed in the optimum display form for the device type. This can improve convenience for the user who uses the sticky 241c.

Those described in the above embodiment are not limitations but some preferable examples of the program, the display method, the information processing device, and the information processing system.

For example, in the case where the device type is a PC, the user may select (set) whether to perform display in the Tiny mode or in the Smartphone mode when the browser size (horizontal) is smaller than the predetermined value, for example, by operating the operation interface 23. In this case, for example, the mathematical tool application may include the program to perform the mathematical tool display process shown in FIG. 4, a program to perform a mathematical tool display process A of determining whether the browser size (horizontal) is equal to or greater than the predetermined value, and if it is equal to or greater than the predetermined value, performing display in the PC mode, and if it is smaller than the predetermined value, performing display in the Smartphone mode, and a program to switch the processes to perform on the basis of the user's selection (settings), and the controller 21 may perform the mathematical tool display process shown in FIG. 4 when display in the Tiny mode is selected (set), and perform the mathematical tool display process A when display in the Smartphone mode is selected (set). This makes it possible to perform the optimum display for user's preference, the scene where the mathematical tools are used, or the like.

Further, in the above embodiment, the controller 21 determines whether the browser size (horizontal) is smaller than the predetermined value, and when determining that the browser size (horizontal) is smaller than the predetermined value, obtains the device information on the terminal device 20 and determines the device type to determine the display mode, but the controller 21 may first determine the device type, and when determining that the device type is a PC, determine the browser size (horizontal) to determine the display mode.

Further, in the above embodiment, the controller 21 of the terminal device 20 performs the mathematical tool display process in cooperation with the mathematical tool application delivered from the server 10, but the controller 11 of the server 10 may generate in cooperation with the program(s) 121 data (control data) for the controller 21 and the browser to perform in cooperation with one another the process for displaying the workspace 241a for the user to use the mathematical tools, and send the data to the terminal device 20 via the communicator 13. For example, the controller 11 of the server 10 may generate data (control data in HTML or the like) for the controller 21 and the browser to perform in cooperation with one another the process for displaying the stickies 241c and the settings menu 241d in the PC mode in the case where the browser size (horizontal) is equal to or greater than the predetermined value, displaying the stickies 241c and the settings menu 241d in the Smartphone mode in the case where the browser size (horizontal) is smaller than the predetermined value and the device type is a smartphone or tablet, and displaying the stickies 241c and the settings menu 241d in the Tiny mode in the case where the browser size (horizontal) is smaller than the predetermined value and the device type is not a smartphone or tablet but a PC, and send the generated data to the terminal device 20 via the communicator 13. In other words, the information processing device of the present disclosure may be realized by the server 10.

Further, for example, in the above, as a computer-readable medium storing the program for performing each process, an HDD or a nonvolatile semiconductor memory is used, but the computer-readable medium is not limited thereto. As the computer-readable medium, a portable recording/storage medium, such as a CD-ROM, may be used. Further, as a medium that provides data of the program via a communication line, a carrier wave may be used.

## Claims

1. A program (121, 221) causing a computer (21) to, in displaying a workspace (241a) including an electronic label (241c) by a browser (221), perform a process of changing a display form of the electronic label (241c) in accordance with a device type of a device (20) on which the browser (221) is running in a case where a width of a display region of the browser (221) is smaller than a predetermined value.

2. The program (121, 221) according to claim 1, wherein the process includes:
in response to the device type being a personal computer in the case where the width of the display region of the browser (221) is smaller than the predetermined value, displaying the workspace (241a) in a second mode that is identical in the display form of the electronic label (241c) to a first mode that is a display mode for a case where the width of the display region of the browser (221) is equal to or greater than the predetermined value; and
in response to the device type being a smartphone or tablet in the case where the width of the display region of the browser (221) is smaller than the predetermined value, displaying the workspace (241a) in a third mode in which the electronic label (241c) is displayed with a width that corresponds to the width of the display region of the browser (221) .

3. The program (121, 221) according to claim 2, wherein the process includes, in the third mode, displaying the electronic label (241c) such that the width of the electronic label (241c) fits in the width of the display region of the browser (221) and is substantially identical to the width of the display region of the browser (221).

4. The program (121, 221) according to claim 2, wherein the process includes, in the third mode, in response to electronic labels (241c) each being the electronic label (241c) to be displayed in the workspace (241a) being present, displaying the electronic labels (241c) next to one another vertically.

5. The program (121, 221) according to claim 2, wherein the process includes, in the second mode and the third mode, displaying a settings menu (241d) for the electronic label (241c) in the workspace (241a) in an identical display form.

6. The program (121, 221) according to claim 2, further causing the computer (21) to:
determine whether the width of the display region of the browser (221) is equal to or greater than the predetermined value;
in response to determining that the width of the display region of the browser (221) is equal to or greater than the predetermined value, display the workspace (241a) in the first mode; and
in response to determining that the width of the display region of the browser (221) is smaller than the predetermined value, display the workspace (241a) in the second mode or in the third mode in accordance with the device type.

7. A display method that is performed by a computer (21), the display method comprising, in displaying a workspace (241a) including an electronic label (241c) by a browser (221), changing a display form of the electronic label (241c) in accordance with a device type of a device (20) on which the browser (221) is running in a case where a width of a display region of the browser (221) is smaller than a predetermined value (S3, S4, S5, S6).

8. An information processing system (1) comprising:
a server (10);
a terminal device (20) communicably connected with the server (10) via a network (N); and
a processor (11, 21) that, in displaying a workspace (241a) including an electronic label (241c) by a browser (221) of the terminal device (20), performs a process of changing a display form of the electronic label (241c) in accordance with a device type of the terminal device (20) on which the browser (221) is running in a case where a width of a display region of the browser (221) is smaller than a predetermined value, or generates data for performing the process.
